# EUROPEAN PATENT SPECIFICATION

(11) **EP 3 282 858 B1**
(45) Date of publication and mention of the grant of the patent: **28.12.2022**
(21) Application number: 16726943.0
(22) Date of filing: 15.04.2016
(51) Int. Cl.: A23D 9/00, A23D 9/007, A23D 9/06, C11B 5/00

(54) **EDIBLE OIL COMPOSITION, PARTICULARLY FOR USE IN FRYING AND COOKING FOOD**
ESSBARE ÖLZUSAMMENSETZUNG, INSBESONDERE ZUR VERWENDUNG BEIM FRITTIEREN UND KOCHEN VON LEBENSMITTELN
COMPOSITION D'HUILE ALIMENTAIRE, EN PARTICULIER POUR UN USAGE DANS LA FRITURE ET LA CUISSON D'ALIMENTS

(30) Priority: 16.04.2015 IT MO20150082
(43) Date of publication of application: 21.02.2018
(73) Proprietor: Olitalia S.r.l., 47122 Forli (FC) (IT)
(72) Inventor: BALLOTTA, Vaimer, 47122 Forli' (FC) (IT); MINGIONE, Silvia, 47122 Forlì (FC) (IT)
(74) Representative: Brunacci, Marco
(86) International application number: PCT/IB2016/052162
(87) International publication number: WO 2016/166718

(56) References cited:
- GB-A- 2 245 812
- US-A1- 2010 021 589
- US-A1- 2010 178 369
- MERRILL L I ET AL: "Oxidative stability of conventional and high-oleic vegetable oils with added antioxidants", FSTA,, 1 January 2008 (2008-01-01), XP002543060,

## Description

### Technical Field

The present invention relates to an edible oil composition, particularly for use in frying and cooking food.

### Background Art

With reference to food industry, the use is known of vegetable oils during the frying procedures of foodstuffs.

In particular, various types of vegetable oil are known derived, by extraction, from the plants' seeds or fruits.

These vegetable oils are a composition of fatty acids varying depending on the species and the climatic conditions of the area where the plant is located; the fatty acids themselves, in turn, vary their properties depending on their chemical structure.

In this regard it is useful to point out that the fatty acids consist of long carbon chains which may have single carbon-carbon bonds (saturated fatty acids), just one double carbon-carbon bond (monounsaturated fatty acids), or several double carbon-carbon bonds (polyunsaturated fatty acids).

The presence of single or double carbon-carbon bonds affects the resistance to high temperatures and to oxidative degradation of such vegetable oils, making them more or less suitable for frying foodstuffs.

In this regard it is noticed that, nowadays, the use of palm oil is widespread when cooking food for its peculiar characteristics of resistance to high temperatures and to oxidative degradation, due to the high concentration of saturated fatty acids.

The high content of saturated fatty acids, however, represents a risk for the consumers' health, since these substances facilitate the accumulation of cholesterol, increasing the risk of cardiovascular disease.

In addition, recent studies have proved that consumption of saturated fatty acids is closely involved in the occurrence of diseases such as: breast, prostate, ovarian and colon cancer, besides having harmful effects on the bones.

It should also be added that prolonged exposure to high temperatures, reached during the frying process, causes a series of chain reactions that lead to the degradation of fatty acids in polar substances comprising, e.g., peroxides, carbonyl derivatives, polymerized fatty acids and others; such substances, besides being harmful to the consumers' health, determine the alteration of the organoleptic properties of vegetable oil, leading to the so-called "rancidification" of the same.

Vegetable oils rich in polyunsaturated fatty acids, on the other hand, although being less harmful to the consumers' health, have a reduced resistance to high temperatures and oxidative degradation; this means that exposure, even for short times, to high temperatures leads to the formation of harmful substances for the consumers' health.

Furthermore, the reduced resistance to oxidative degradation compels the consumer to frequently change the vegetable oil, not being able to reuse for several frying cycles, causing a not negligible economic burden.

Other compositions are known from WO2010/021589, GB2245812 and US2010/178369.

### Description of the Invention

The main aim of the present invention is to provide an edible oil composition, particularly for use in frying and cooking food, which has high resistance to high temperatures and to oxidative degradation.

Another object of the present invention is to provide an edible oil composition, particularly for use in frying and cooking food, which is usable for several frying cycles, leading to a significant cost savings for the consumer and, at the same time, without the risk of incurring in harmful substances for the health of the same.

Yet another object of the present invention is to provide an edible oil composition, particularly for use in frying and cooking food which, even following prolonged exposure to high temperatures, slows down the degradation of fatty acids into harmful substances for the consumer's health.

A further object of the present invention is to provide an edible oil composition, particularly for use in frying and cooking food, which allows to overcome the mentioned drawbacks of the prior art within the ambit of a simple, rational, easy, effective to use and affordable solution.

The above mentioned objects are achieved by the present edible oil composition, particularly for use in frying and cooking food, having the characteristics of claim 1.

### Brief Description

Other characteristics and advantages of the present invention will become better evident from the description of a preferred, but not exclusive, embodiment of an edible oil composition, particularly for use in frying and cooking food.

### Embodiments of the Invention

In the present description reference is made to an edible oil composition, particularly for use in frying and cooking food, usable for domestic and/or industrial frying processes.

The composition consists of high oleic sunflower seed oil, natural extract rich in tocopherol (E306) and rosemary extract (E392).

In the context of this specification by "high oleic" sunflower seed oil is meant an oil extracted from sunflower seeds of a variety called "high oleic" and from which an oil is obtained having a concentration of oleic acid greater than the percentage composition of fatty acids of "traditional" sunflower seed oil.

In this regard, it is useful to point out that a standard sunflower seed oil has an oleic acid concentration between 14% and 39.4% and is, on the other hand, rich in linoleic acid and for this is called "high linoleic".

The high oleic sunflower seed oil, instead, comprises oleic acid present in a concentration higher than 70% and on average around 80%.

In detail, the oleic acid (cis-9-octadecenoic acid) is a monounsaturated fatty acid belonging to the category of the omega-9, that is, essential fatty acids, of great metabolic importance for the human organism, with a carboxyl group and a carbon chain of 18 carbon atoms having just one cis double bond which is arranged, with respect to the methyl group, between the carbon in position 9 and the carbon in position 10.

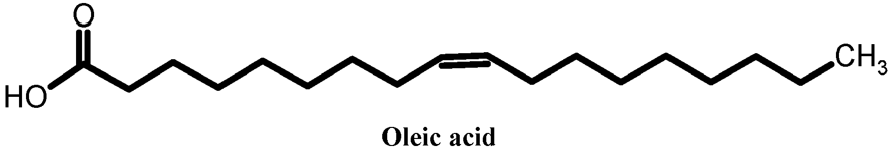

As known to the person skilled in the art, the high oleic sunflower seed oil has a variable composition of fatty acids depending on the environmental conditions in which the plant grows.

The natural extract rich in tocopherol (E306) comprises natural mixed tocopherols.

As known to the person skilled in the art, the tocopherols are composed of an aromatic ring and a long isoprenoid chain.

In the present case, the tocopherols are biological antioxidants in which the phenolic groups present on the aromatic ring, thanks to their high reactivity, act as terminators of the radical reaction of oxidation; this allows to destroy the most reactive forms of oxygen radicals and other free radicals, protecting the fatty acids from oxidative degradation.

In this regard it is useful to point out that the term "tocopherol" is used as a collective meaning for four forms of tocopherols, different to one another by the number and position of the methyl groups on the aromatic ring, listed in Table 1: α-tocopherol, β-tocopherol, γ-tocopherol, δ-tocopherol.

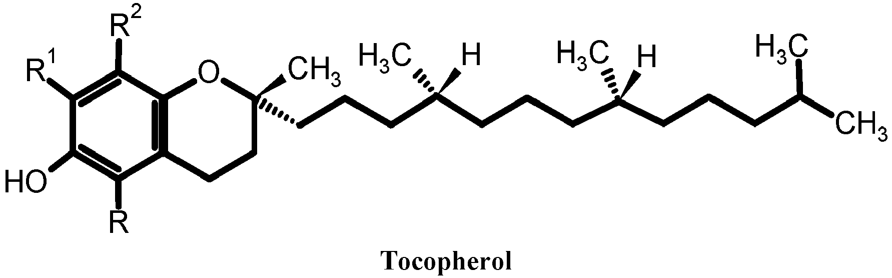

**Table 1**

| **COMPOUND** | **R** | **R¹** | **R²** |
|---|---|---|---|
| α-tocopherol | CH₃ | CH₃ | CH₃ |
| β-tocopherol | CH₃ | H | CH₃ |
| γ-tocopherol | H | CH₃ | CH₃ |
| δ-tocopherol | H | H | CH₃ |

Advantageously, the natural extract rich in tocopherol (E306) is present in a concentration between 38 ppm and 766 ppm, evaluated with respect to the amount of high oleic sunflower seed oil.

Conveniently, the natural extract rich in tocopherol (E306) is present in a concentration between 234 ppm and 316 ppm, evaluated with respect to the amount of high oleic sunflower seed oil.

The latter range is particularly suitable to compensate for the lack of accuracy that sometimes occurs during the dosage of the food ingredients at an industrial level.

Preferably, the natural extract rich in tocopherol (E306) is present in the concentration substantially equal to 275 ppm, evaluated with respect to the amount of high oleic sunflower seed oil.

As regards the rosemary extract (E392), the latter comprises active substances such as carnosic acid and carnosol; in the present case, carnosic acid and carnosol are dipertenoids of polyphenolic nature that act as powerful antioxidants against the oxidation of the fatty acids present in the oil.

This effect is due to the chemical structure of carnosic acid and carnosol, reported here below.

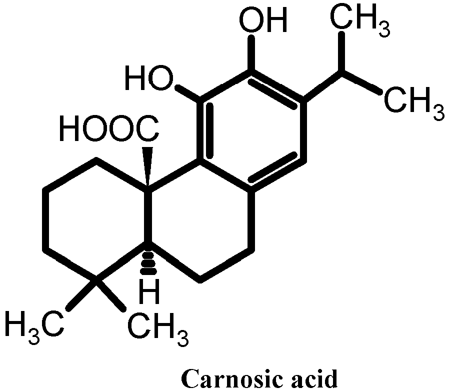

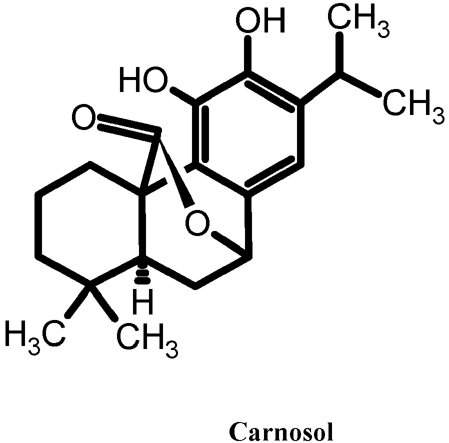

In particular, the two phenolic groups present on the aromatic ring, thanks to their high reactivity, act as terminators of the radical reaction of oxidation of fatty acids caused by the rising of temperature, during the frying process. Advantageously, the rosemary extract (E392) is present in a concentration between 45 ppm and 905 ppm, evaluated with respect to the amount of high oleic sunflower seed oil (with carnosic acid and carnosol, the two active substances, in the overall concentration between 1.6 and 32 ppm). Conveniently, the rosemary extract (E392) is present in the concentration between 276 ppm and 374 ppm, evaluated with respect to the amount of high oleic sunflower seed oil (with carnosic acid and carnosol, the two active substances, in the overall concentration between 9.7 and 13.1 ppm).

The latter range is particularly suitable to compensate for the lack of accuracy that sometimes occurs during the dosage of the food ingredients at an industrial level.

Preferably, said rosemary extract (E392) is present in the concentration substantially equal to 325 ppm, evaluated with respect to the amount of high oleic sunflower seed oil (with carnosic acid and carnosol, the two active substances, in the overall concentration equal to 11.4 ppm).

The ingredients of the present composition, namely the high oleic sunflower seed oil, the natural extract rich in tocopherol (E306) and rosemary extract (E392), may be mixed together simultaneously at the time when the composition is produced.

Alternative embodiments cannot however be ruled out wherein the natural extract rich in tocopherol (E306) and rosemary extract (E392) are premixed with one another to obtain a concentrated product, subsequently added to the high oleic sunflower seed oil.

In this case, to obtain the concentrated product, the natural extract rich in tocopherol (E306) and rosemary extract (E392) are added to a generic sunflower seed oil, e.g. in the following concentrations of weight evaluated with respect to the total weight of said product concentrate:

| | |
|---|---|
| - natural extract rich in tocopherol (E306) | 38.3% |
| - rosemary extract (E392) | 45.3% |
| - sunflower seed oil: | 16.4% |

### EXAMPLE 1

An edible oil composition has been made, particularly for use in frying and cooking food, comprising high oleic sunflower seed oil mixed with the natural extract rich in tocopherol (E306) and rosemary extract (E392) in the following concentrations, evaluated with respect to the amount of high oleic sunflower seed oil:

| | |
|---|---|
| - natural extract rich in tocopherol (E306) | 275 ppm |
| - rosemary extract (E392) | 325 ppm |

The rosemary extract (E392) contains carnosic acid and carnosol in the overall concentration equal to 11.4 ppm.

As will be better described hereinafter, the composition thus obtained has a very high resistance to oxidation expressed by the so-called "OSI time" (oxidative stability index), expressed in hours, also known as induction time; in other words, this parameter expresses the resistance to oxidation and, therefore, to oil rancidification.

In this regard it is useful to point out that by the term "OSI time" is meant the time interval that elapses between the beginning of the oxidative degradation process and the appearance of such reaction products.

The oxidative stability of an oil depends mainly on the natural content of phenolic substances such as carnosic acid, carnosol and tocopherols and it is also determined depending on the characteristics of the vegetable type of origin and on the technologies used in the phases of the production chain.

In detail, to evaluate the oxidative stability of the composition, different oil samples have been compared to one another, having different characteristics:
- sample A (high oleic sunflower seed oil);
- sample B (high oleic sunflower seed oil with added tocopherols); and
- sample C (high oleic sunflower seed oil with added tocopherols and rosemary extract).

The samples have been subjected to forced oxidation, using heat and a flow of air under standardized and controlled conditions.

It has been chosen, based on data reported in literature, to make the forced oxidation at 110°C, with a flow of air of 120 mL/min.

The resistance to oxidation has been determined, in duplicate, by an electrode measuring the variation in the conductivity of double-distilled water which reaches the flow of air.

Through this measurement carried out continuously, the instrument extrapolates, starting from the initial stage of the oxidation reaction to the stage wherein the latter takes an exponential pattern, the data relating to the induction period, precisely known as OSI time (Jebe et al., 1993).

For the evaluation of the oxidative stability of oil samples the Oxidative Stability Instrument (OSI), with eight channels (Omnion, Decatur, IL, USA) has been used (Jebe et al., 1993).

The instrument employed has eight thermostat slots at 110°C ± 0.1°C, in which sample test tubes have been introduced, each containing 0.5 g ± 0.1 g of sample and air was blown at the previously defined flow rate.

An electrode, connected in series, has permitted the continuous measurement of the variation in conductivity, due to the production of polar and volatile molecules with low molecular weight (mainly formic acid), produced during the oxidation reaction of fatty acids.

In this regard it is useful to point out that the above oxidation reaction produces, in a first stage, peroxides and, in a second stage, low molecular weight organic acids, aldehydes and ketones with a typical rancid odor.

These compounds are transported by the air jet into a second tank containing deionized water and in which the variation in conductivity is continuously measured; in the present case, this variation in conductivity reveals the presence of organic acids and, therefore, the degradation state of the sample.

The table below shows the OSI time values detected by the above method.

**TABLE 2**

| **SAMPLE** | **REPETITIONS** | **OSI TIME at 110°C (hours)** | **AVERAGE ± SD** |
|---|---|---|---|
| **SAMPLE A** | 1 | 16.40 | 16.38 ± 0.04 |
| **SAMPLE A** | 2 | 16.35 | |
| **SAMPLE B** | 1 | 21.65 | 21.55 ± 0.14 |
| **SAMPLE B** | 2 | 21.45 | |
| **SAMPLE C** | 1 | 23.60 | 23.65 ± 0.28 |
| **SAMPLE C** | 2 | 23.70 | |

From the data shown in Table 2 it is clear that the presence of the natural extract rich in tocopherol (E306) and the rosemary extract (E392) leads to a significant increase in the OSI time.

In fact, the SAMPLE B (high oleic sunflower seed oil with added tocopherols) shows an increase in the average OSI time, compared to the SAMPLE A (high oleic sunflower seed oil) by about 30%.

Furthermore, in the case of the SAMPLE C (high oleic sunflower seed oil with added tocopherols and rosemary extract), the latter shows an increase, compared to SAMPLE A, substantially equal to about 45%; this means that SAMPLE C consists in the composition most stable to oxidative degradation implemented by the rising in temperatures during the frying process.

It has in practice been found how the described invention achieves the intended objects.

In particular the fact is underlined that the particular expedient to provide for a composition comprising high oleic sunflower seed oil, natural extract rich in tocopherols (E306) and rosemary extract (E392) allows obtaining an edible oil composition, particularly for use in frying and cooking food, which has high resistance to high temperatures and to oxidative degradation and that is usable for numerous frying cycles, leading to significant cost savings for the consumer and, at the same time, without the risk of incurring in substances harmful to the health of the same.

It should also be added that the presence of the natural extract rich in tocopherols (E306) and rosemary extract (E392) allows, also following prolonged exposure to high temperatures, slowing down the degradation of fatty acids into harmful substances for the consumer's health.

## Claims

1. Edible oil composition, particularly for use in frying and cooking food, **characterized by** the fact that it consists of high oleic sunflower seed oil, natural extract rich in tocopherol (E306) and rosemary extract (E392).

2. Composition according to claim 1, **characterized in that** said high oleic sunflower seed oil comprises oleic acid present in a concentration above 70%, compared to the fatty acid composition of said high oleic sunflower seed oil.

3. Composition according to one or more of the preceding claims, **characterized in that** said natural extract rich in tocopherol (E306) is present in a concentration between 38 ppm and 766 ppm, evaluated with respect to the amount of said high oleic sunflower seed oil.

4. Composition according to one or more of the preceding claims, **characterized in that** said natural extract rich in tocopherol (E306) is present in a concentration between 234 ppm and 316 ppm, evaluated with respect to the amount of said high oleic sunflower seed oil.

5. Composition according to one or more of the preceding claims, **characterized in that** said natural extract rich in tocopherol (E306) is present in a concentration substantially equal to 275 ppm, evaluated with respect to the amount of said high oleic sunflower seed oil.

6. Composition according to one or more of the preceding claims, **characterized in that** said rosemary extract (E392) is present in a concentration between 45 ppm and 905 ppm, evaluated with respect to the amount of said high oleic sunflower seed oil.

7. Composition according to one or more of the preceding claims, **characterized in that** said rosemary extract (E392) is present in a concentration between 276 ppm and 374 ppm, evaluated with respect to the amount of said high oleic sunflower seed oil.

8. Composition according to one or more of the preceding claims, **characterized in that** said rosemary extract (E392) is present in a concentration substantially equal to 325 ppm, evaluated with respect to the amount of said high oleic sunflower seed oil.

## Patentansprüche

1. Speiseölzusammensetzung, insbesondere zur Verwendung beim Frittieren und Kochen von Lebensmitteln, **dadurch gekennzeichnet, dass** sie aus Sonnenblumenkernöl mit hohem Ölsäuregehalt, einem natürlichen Extrakt, der reich an Tocopherol (E306) ist, und Rosmarinextrakt (E392) besteht.

2. Zusammensetzung nach Anspruch 1, **dadurch gekennzeichnet, dass** das Sonnenblumenkernöl mit hohem Ölsäuregehalt Ölsäure umfasst, die in einer Konzentration von über 70 % im Vergleich zur Fettsäurezusammensetzung des Sonnenblumenkernöls mit hohem Ölsäuregehalt vorliegt.

3. Zusammensetzung nach einem oder mehreren der vorhergehenden Ansprüche, **dadurch gekennzeichnet, dass** der natürliche Extrakt, der reich an Tocopherol (E306) ist, in einer Konzentration zwischen 38 ppm und 766 ppm vorliegt, ausgewertet mit Bezug auf die Menge des Sonnenblumenkernöls mit hohem Ölsäuregehalt.

4. Zusammensetzung nach einem oder mehreren der vorhergehenden Ansprüche, **dadurch gekennzeichnet, dass** der natürliche Extrakt, der reich an Tocopherol (E306) ist, in einer Konzentration zwischen 234 ppm und 316 ppm vorliegt, ausgewertet mit Bezug auf die Menge des Sonnenblumenkernöls mit hohem Ölsäuregehalt.

5. Zusammensetzung nach einem oder mehreren der vorhergehenden Ansprüche, **dadurch gekennzeichnet, dass** der natürliche Extrakt, der reich an Tocopherol (E306) ist, in einer Konzentration von im Wesentlichen 275 ppm vorliegt, ausgewertet mit Bezug auf die Menge des Sonnenblumenkernöls mit hohem Ölsäuregehalt.

6. Zusammensetzung nach einem oder mehreren der vorhergehenden Ansprüche, **dadurch gekennzeichnet, dass** der Rosmarinextrakt (E392) in einer Konzentration zwischen 45 ppm und 905 ppm vorliegt, ausgewertet mit Bezug auf die Menge des Sonnenblumenkernöls mit hohem Ölsäuregehalt.

7. Zusammensetzung nach einem oder mehreren der vorhergehenden Ansprüche, **dadurch gekennzeichnet, dass** der Rosmarinextrakt (E392) in einer Konzentration zwischen 276 ppm und 374 ppm vorliegt, ausgewertet mit Bezug auf die Menge des Sonnenblumenkernöls mit hohem Ölsäuregehalt.

8. Zusammensetzung nach einem oder mehreren der vorhergehenden Ansprüche, **dadurch gekennzeichnet, dass** der Rosmarinextrakt (E392) in einer Konzentration von im Wesentlichen 325 ppm vorliegt, ausgewertet mit Bezug auf die Menge des Sonnenblumenkernöls mit hohem Ölsäuregehalt.

## Revendications

1. - Composition d'huile alimentaire, en particulier pour une utilisation dans la friture et la cuisson d'aliments, **caractérisée par le fait qu'**elle consiste en huile de graines de tournesol à haute teneur oléique, extrait naturel riche en tocophérol (E306) et extrait de romarin (E392).

2. - Composition selon la revendication 1, **caractérisée par le fait que** ladite huile de graines de tournesol à haute teneur en acide oléique comprend de l'acide oléique présent dans une concentration supérieure à 70 %, par comparaison avec la composition d'acides gras de ladite huile de graines de tournesol à haute teneur oléique.

3. - Composition selon l'une ou plusieurs des revendications précédentes, **caractérisée par le fait que** ledit extrait naturel riche en tocophérol (E306) est présent dans une concentration entre 38 ppm et 766 ppm, évaluée par rapport à la quantité de ladite huile de graines de tournesol à haute teneur oléique.

4. - Composition selon l'une ou plusieurs des revendications précédentes, **caractérisée par le fait que** ledit extrait naturel riche en tocophérol (E306) est présent dans une concentration entre 234 ppm et 316 ppm, évaluée par rapport à la quantité de ladite huile de graines de tournesol à haute teneur oléique.

5. - Composition selon l'une ou plusieurs des revendications précédentes, **caractérisée par le fait que** ledit extrait naturel riche en tocophérol (E306) est présent dans une concentration sensiblement égale à 275 ppm, évaluée par rapport à la quantité de ladite huile de graines de tournesol à haute teneur oléique.

6. - Composition selon l'une ou plusieurs des revendications précédentes, **caractérisée par le fait que** ledit extrait de romarin (E392) est présent dans une concentration entre 45 ppm et 905 ppm, évaluée par rapport à la quantité de ladite huile de graines de tournesol à haute teneur oléique.

7. - Composition selon l'une ou plusieurs des revendications précédentes, **caractérisée par le fait que** ledit extrait de romarin (E392) est présent dans une concentration entre 276 ppm et 374 ppm, évaluée par rapport à la quantité de ladite huile de graines de tournesol à haute teneur oléique.

8. - Composition selon l'une ou plusieurs des revendications précédentes, **caractérisée par le fait que** ledit extrait de romarin (E392) est présent dans une concentration sensiblement égale à 325 ppm, évaluée par rapport à la quantité de ladite huile de graines de tournesol à haute teneur oléique.
